# EUROPÄISCHE PATENTSCHRIFT

(11) **EP 2 735 425 B1**
(45) Veröffentlichungstag und Bekanntmachung des Hinweises auf die Patenterteilung: **18.03.2020**
(21) Anmeldenummer: 13005420.8
(22) Anmeldetag: 19.11.2013
(51) Int. Cl.: B29C 45/76, G05B 19/409

(54) **Bedieneinheit für eine Spritzgießmaschine**
Operating unit for an injection moulding machine
Unité de commande pour une machine de moulage par injection

(30) Priorität: 26.11.2012 AT 12392012
(43) Veröffentlichungstag der Anmeldung: 28.05.2014
(73) Patentinhaber: ENGEL AUSTRIA GmbH, 4311 Schwertberg (AT)
(72) Erfinder: Dimmler, Gerhard, 4641 Steinhaus (AT); Giessauf, Josef, 4320 Perg (AT); Hölzl, Rainer, 4284 Tragwein (AT); Kern, Albin, 4311 Schwertberg (AT); Mairhofer, Friedrich, 4331 Naarn im Machland (AT); Steinparzer, Helmut, 4400 Steyr (AT); Voggeneder, Johann, 4310 Mauthausen (AT); Wiesinger, Karl, 4501 Neuhofen/Krems (AT)
(74) Vertreter: Torggler & Hofinger Patentanwälte

(56) Entgegenhaltungen:
- WO-A2-01/67191
- DE-A1- 10 334 153

## Beschreibung

Die Erfindung betrifft eine Bedieneinheit für eine Spritzgießmaschine mit einem, insbesondere berührungsempfindlichen, Bildschirm zur Anzeige eines Bedienprogramms, einer Steuer- oder Regeleinheit zum Übermitteln von Bediensignalen an Spritzgießmaschinenelemente, wobei in der Steuer- oder Regeleinheit das Bedienprogramm gespeichert ist, und zumindest einer Bedientaste, bei deren Betätigung die Steuer- oder Regeleinheit eine Aktion eines Spritzgießmaschinenelementes auslöst. Zudem betrifft die Erfindung ein Verfahren zum Bedienen einer solchen Bedieneinheit.

Die Komplexität für die Bedienung von Spritzgießmaschinen hat in den letzten Jahren stark zugenommen. Dies ist vor allem darauf zurückzuführen, dass immer mehr unterschiedliche Arten von Spritzgießmaschinen mit unterschiedlichen Herstellungsmöglichkeiten produziert werden, alle diese unterschiedlichen Spritzgießmaschinen aber über ein und das selbe Bedienprogramm bedient werden. Als Beispiel sei für eine solche Bedienung einer Spritzgießmaschine auf die anmeldereigene, nicht vorveröffentlichte, österreichische Patentanmeldung A 851/2011 (entspricht der AT 511 487 A1) verwiesen, in der es vor allem um die Vereinfachung der Zuweisung von Auslösesymbolen zu Bedientasten geht. Ähnliche Bedieneinheiten gehen aus der WO 01/67191 A2 und der DE 103 34 153 A1 hervor.

Aufgrund der hohen Komplexität heutiger Spritzgießmaschinen bzw. der hohen Automatisierung sind eine Vielzahl von Parametern auf vielen verschiedenen Bildseiten bzw. Programmseiten verteilt. Für die Bediener ist es dabei schwierig den gewünschten Parameter in dieser Vielzahl von Bildseiten und Parametern zu finden und zwischen den Bildseiten (Programmseiten) schnell zu navigieren. Entsprechend der Werkzeugausführung ist es sehr häufig so, dass nicht der gesamte Funktionsumfang der Maschine benötigt wird, dieser jedoch dem Bediener über das gesamte Bedienprogramm und dessen Untermenüs vollständig zur Verfügung steht.

Die Aufgabe der vorliegenden Erfindung besteht daher darin, eine Bedieneinheit und ein Verfahren zu schaffen, bei dem die aus dem Stand der Technik bekannten Nachteile behoben sind. Insbesondere soll die Bedienkomplexität verringert werden und ein übersichtliches Bedienen der Spritzgießmaschine ermöglicht werden.

Dies wird für eine Bedieneinheit mit den Merkmalen des Oberbegriffes von Anspruch 1 unter anderem dadurch erreicht, dass das Bedienprogramm eine hierarchische Systemarchitektur mit zumindest einer oberen, anlagenspezifischen Ebene, wobei in der anlagenspezifischen Mittelebene zwischen verschiedenen Anlagenbereichen auswählbar ist, und einer oberen, aufgabenspezifischen Ebene, wobei in der aufgabenspezifischen Mittelebene zwischen verschiedenen Aufgabenbereichen auswählbar ist, und einer Vielzahl von Unterebenen, wobei in jeder gewählten Unterebene nur dem gewählten Anlagenbereich oder nur dem gewählten Aufgabenbereich zugeordnete ablaufrelevante Programmseiten anzeigbar sind, aufweist. Dieses neue Navigations- bzw. Bedienkonzept ist somit auf wenige Ebenen reduziert und wird sich in der Regel auf zwei Ebenen (obere Ebene und Unterebene) beschränken.

Erfindungsgemäß ist gemäß einer ersten Variante beim Einstieg in das Bedienprogramm automatisch eine der beiden oberen Ebenen vorselektioniert, wobei aber beide obere Ebenen in der hierarchischen Systemarchitektur gleichrangig sind. Ein Button für die jeweils nicht ausgewählte, obere Ebene wird aber ebenfalls angezeigt, wobei durch Betätigen dieses Buttons entsprechend die verschiedenen Anlagenbereiche bzw. die verschiedenen Aufgabenbereich angezeigt werden.

Alternativ ist es erfindungsgemäß aber auch möglich in der hierarchischen Systemarchitektur eine Hauptebene, in der zwischen einem anlagenspezifischen Menü und einem aufgabenspezifischen Menü auswählbar ist, vorzusehen. Bei dieser zweiten Variante werden in der Hauptebene zwei Startpunkte für das System angezeigt, die auf dem Startscreen angeboten werden. Diese beiden sind das anlagenspezifische Menü (Anlagenbereichsorientierung) und das aufgabenspezifische Menü (Aufgabenorientierung). Wenn das anlagenspezifische Menü gewählt wurde, erfolgt eine Darstellung des gesamten Produktionszyklus, über die man sich Bildseiten bzw. Programmseiten anzeigen lassen kann die dem angewählten Bereich zugeordnet sind. Beispiele für Anlagenbereich sind Schließbereich, Spritzbereich, Ablagebereich, Entformbereich, Peripheriebereich, usw. Bei gewähltem aufgabenspezifischem Menü erfolgt eine Anzeige aller Aufgaben die ein Benutzer mit der Anlage in einem Unternehmen durchführen könnte. Beispiele dafür sind die Wartung der Maschine und Roboter, Umrüsten, Produktion vorbereiten, Produktion starten/stoppen, Produktion kontrollieren, Störungsursache suchen, Produktion optimieren, Erstbemusterung, Überwachung einstellen, Systemeinstellungen, Produktionseinstellungen, kundenspezifische Aufgaben usw. Zusätzlich sind bei gewähltem aufgabenspezifischem Menü diverse Konfigurationsmöglichkeiten auswählbar. Das aufgabenorientierte Menü bildet auch den Startpunkt für einen Assistenten.

Vor allem für einen übersichtlichen Beginn eines Bedienablaufes ist bevorzugt vorgesehen, dass das System bzw. das Bedienprogramm mit einer einfachen Darstellung des Produktzyklus der Gesamtanlage gestartet wird, über die sehr schnell wichtige Programmseiten erreichbar sind. Durch den Einsatz spezieller Bildschirmkomponenten, vor allem in der oberen Ebene (Auswahlkarussell oder Schnellruftastenraster) im Zentrum des Visualisierungsbereichs des Bildschirms, wird man schnell und intuitiv durch die unterschiedlichen Bildseiten bzw. Programmseiten geführt. Über das Auswahlkarussell und die Aufgaben- bzw. Anlagenauswahl erfolgt eine intelligente Vorauswahl der angebotenen Programmseiten.

Für eine besonders gute Übersichtlichkeit wird in der Titelleiste der aktuelle Navigationspfad eingeblendet. Mittels einer entsprechenden Schaltfläche (Hierarchietaste, Zurück-Taste, Nach-oben-Taste) kann in eine darüberliegende Ebene gewechselt werden. Bevorzugt ist demnach vorgesehen, dass in jeder Ebene Hierarchietasten anzeigbar sind, wobei durch Betätigen der Hierarchietaste eine höhere Ebene anzeigbar ist.

Bevorzugt ist weiters vorgesehen, dass einem Anlagenbereich oder einem Aufgabenbereich neue Programmseiten oder Programmseiten anderer Anlagenbereiche oder anderer Aufgabenbereiche zuweisbar sind. Demnach hat jeder Bediener die Möglichkeit Bildseiten bzw. Programmseiten einem Anlagenbereich oder einer Aufgabe hinzuzufügen oder auch zu entfernen, wenn dies für ihn notwendig oder hilfreich erscheint. Eine Änderung der Reihenfolge zum Anpassen an die Arbeitsabfolge ist dem Bediener ebenfalls möglich.

Um eine zusätzliche Reduzierung der Komplexität zu erreichen ist bevorzugt vorgesehen, dass eine Unterscheidung in Konfigurationsparameter und Produktionsparameter erfolgt. Die Konfiguration wird bei Verwendung eines neuen Werkzeugs einmalig gewählt und reduziert dadurch die für den Betrieb notwendigen Parameter deutlich.

Eine weitere Möglichkeit zur Reduzierung der Bedienkomplexität liegt darin, indem man dem Bediener die darstellbaren Bildseiten und Zugriffsrechte aufgrund seiner Benutzerrolle beschränkt. Dafür wird jedem Benutzer bei der Vergabe der Zugriffsberechtigung unter anderem auch eine Benutzerrolle zugewiesen. Mögliche Benutzerrollen sind Rüster, Allrounder, Prozesstechniker, Qualitätsmanager, Instandhalter, Hilfspersonal, ENGEL-Techniker usw. Somit werden in der Aufgabenübersicht (aufgabenspezifische Ebene) nur mehr jene Aufgaben angeboten, welche der Bediener entsprechend seiner Benutzerrolle zu erfüllen hat bzw. erfüllen kann. Zum Beispiel wird der Instandhalter die Aufgaben "System", "Wartung" und "alle Bildseiten" vorfinden bzw. jene Aufgaben, welche nicht seiner Benutzerrolle zugewiesen sind als inaktive Bildseiten (ausgegraut) angezeigt bekommen. Der Inhalt der Aufgabe "alle Bildseiten" wird wiederum auf die Benutzerrolle spezifisch eingeschränkt. Ein einfaches Berechtigungskonzept weist somit jedem Benutzer Berechtigungen bzw. Benutzerrollen zu, die er tatsächlich nutzen darf. Dabei kann noch die Art der Autorisierung spezifiziert werden, beispielsweise "lesen", "verändern", "löschen" oder "verwenden". Auch die Beschränkung auf Bereich innerhalb welcher Werte verändert werden dürfen ist möglich. So darf zum Beispiel die Benutzerrolle "Hilfspersonal" einen beliebigen Wert "x" nur um maximal 2 % verändern, der "Prozesstechniker" aber um 100 %.

Durch Einsatz dieser Konzepte reduzieren sich in einer Vielzahl von Anwendungsfällen sowohl die Anzahl der für einen Bediener angebotenen Programmseiten als auch die darauf befindlichen Parameter um bis zu 90%.

Schutz wird auch begehrt für ein Verfahren welches die Schritte gegebenenfalls Anzeigen einer Hauptebene des Bedienprogramms mit einem anlagenspezifischen Menü und einem aufgabenspezifischen Menü, gegebenenfalls Auswählen zwischen dem anlagenspezifischen Menü und dem aufgabenspezifische Menü, Anzeigen einer oberen, anlagenspezifischen Ebene oder einer oberen, aufgabenspezifischen Ebene in Abhängigkeit des vorher gewählten Menüs oder in Abhängigkeit einer automatisch vorselektionierten Auswahl, Auswählen eines Anlagenbereichs aus verschiedenen angezeigten Anlagenbereichen oder eines Aufgabenbereichens aus verschiedenen angezeigten Aufgabenbereichen, Anzeigen einer Unterebene in Abhängigkeit des ausgewählten Anlagebereichs oder des ausgewählten Aufgabenbereichs, wobei in jeder gewählten Unterebene nur dem gewählten Anlagenbereich oder nur dem gewählten Aufgabenbereich zugeordnete ablaufrelevante Programmseiten angezeigt werden, aufweist.

Nach dem Auswählen der Unterebene können beliebige nächste Schritte gewählt werden. Am häufigsten werden die Schritte Auswählen eines auf der Programmseite angezeigten Auslösesymbols, wodurch eine entsprechende Aktion eines Spritzgießmaschinenelements ausgelöst wird, oder Auswählen bzw. Ändern eines auf der Programmseite angezeigten maschinenspezifischen Parameters oder Navigieren über Navigationstasten zu einer nächsten oder einer vorhergehenden Programmseite des ausgewählten Anlagenbereichs oder des ausgewählten Aufgabenbereichs oder Navigieren über Hierarchietasten zu einer anderen Ebene des Bedienprogramms oder Auswählen einer Metaebene des Bedienprogramms gewählt.

Schutz wird weiters begehrt für eine Spritzgießmaschine mit mehreren aktivierbaren Spritzgießmaschinenelementen und einer erfindungsgemäßen Bedieneinheit.

Weitere Einzelheiten und Vorteile der vorliegenden Erfindung werden anhand der Figurenbeschreibung unter Bezugnahme auf die in den Zeichnungen dargestellten Ausführungsbeispiele im Folgenden näher erläutert. Darin zeigen:
- Fig. 1: eine Spritzgießmaschine,
- Fig. 1a: eine Bedieneinheit der Spritzgießmaschine,
- Fig. 2: schematisch die hierarchische Systemarchitektur des Bedienprogramms,
- Fig. 3: einen Bildschirmauszug bei ausgewählter anlagenspezifischer Ebene,
- Fig. 4: einen Bildschirmauszug bei ausgewählter aufgabenspezifischer Ebene und
- Fig. 5: einen Bildschirmauszug einer Unterebene.

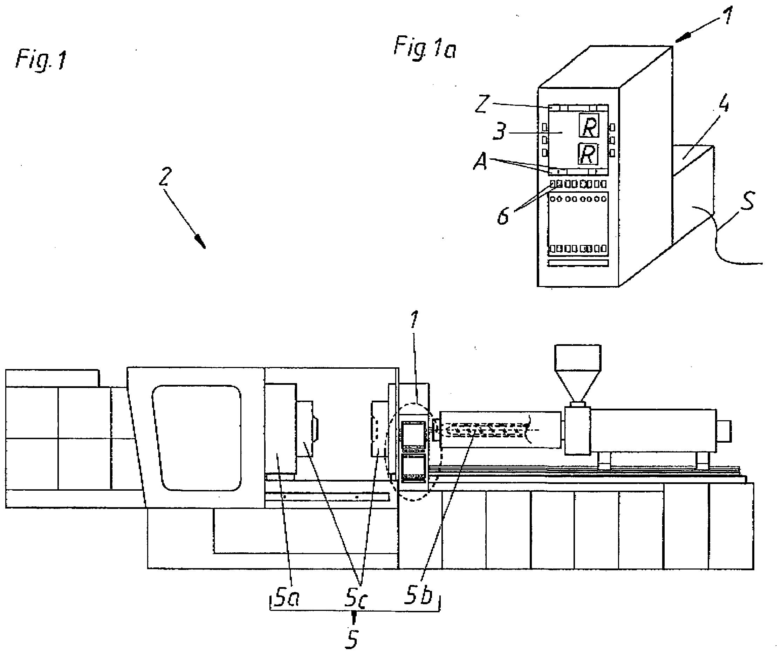

Fig. 1 zeigt schematisch eine Spritzgießmaschine 2 und Fig. 1a eine Bedieneinheit 1. Schematisch sind in Fig. 1 einige bewegbare bzw. ansteuerbare Spritzgießmaschinenelemente 5 dargestellt. Beispielhaft sind die bewegbare Formaufspannplatte 5a, die heiz- bzw. kühlbaren Formwerkzeuge 5c und die drehbare bzw. translatorisch bewegbare Einspritzschnecke 5b dargestellt. Eine Aktion dieser Spritzgießmaschinenelemente 5 ist durch Betätigung der Bedientaste 6 auslösbar. Die Bedientaste 6 kann als separate, mechanische Taste oder als Teil der Touchfläche des Bildschirms 3 ausgebildet sein. Je nach zugeordnetem Auslösesymbol A wird bei Betätigung der Bedientaste 6 über die Steuer- oder Regeleinheit 4 und das Bedienprogramm B ein Bediensignal S an das korrespondierende Spritzgießmaschinenelement 5 übermittelt und die entsprechende Aktion durchgeführt. Auf dem Bildschirm 3 der Bedieneinheit 1 sind neben den Auswahlsymbolen A auch die Metaebene Z und diverse maschinenspezifische Parameter R dargestellt. Das Zuweisen der Auslösesymbole A zur Bedientaste 6 erfolgt wie an sich bekannt.

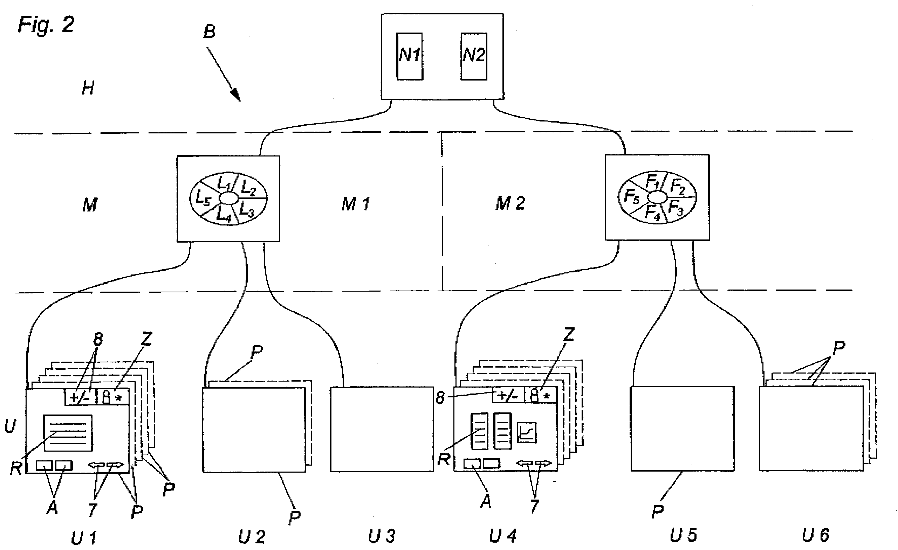

In Fig. 2 ist schematisch das in der Steuer- oder Regeleinheit 4 gespeicherte Bedienprogramm B mit den drei Ebenen (Hauptebene H, obere Ebene M und Unterebene U) dargestellt. Die Hauptebene H bildet die Startseite des Bedienprogramms B und bildet somit die Spitze der hierarchischen Systemarchitektur. In dieser Hauptebene H kann zwischen dem anlagenspezifischen Menü N1 und dem aufgabenspezifischen Menü N2 ausgewählt werden.

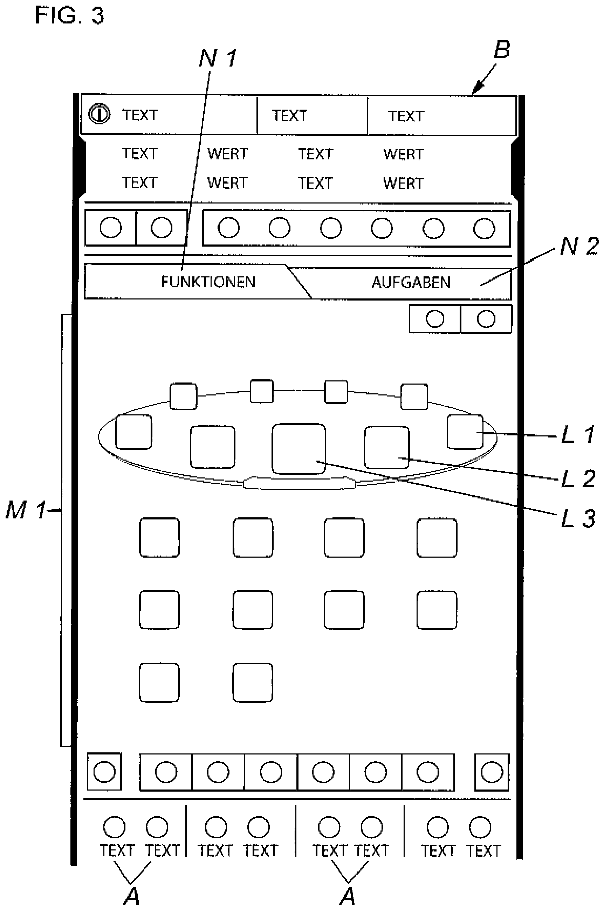

Wird das anlagenspezifische Menü N1 ausgewählt, so wechselt das Bedienprogramm B und entsprechend die Anzeige auf dem Bildschirm 3 in die obere anlagenspezifische Ebene M1. Da die gesamte Spritzgießmaschine 2 in unterschiedliche Anlagenbereiche L1 bis L5 (z.B. Schließbereich, Spritzbereich, Ablagenbereich, usw.) unterteilt ist, werden entsprechend diese Anlagenbereiche L1 bis L5 in der Mittelebene M1 symbolisch angezeigt. Vorteilhafterweise werden diese unterschiedlichen Anlagenbereiche L1 bis L5 über eine kreisförmig bzw. karussellartig angeordnete Auswahl (siehe auch Fig. 3) der vorhandenen Anlagenbereiche L1 bis L5 dargestellt, wodurch schnell zwischen den einzelnen Anlagenbereichen L1 bis L5 gewechselt werden kann.

Sobald der Bediener aus einem dieser Anlagenbereiche L1 bis L5 ausgewählt hat, wird in die Unterebene U gewechselt. Darin werden dem Bediener nur mehr jene Programmseiten P angeboten, welche dem gewählten Anlagenbereich L zugeordnet sind. Somit kann sich der Bediener nur mehr mit den wirklich für ihn wichtigen und notwendigen Programmseiten P befassen und muss sich nicht durch andere, für Ihn nicht notwendige Programmseiten P "wühlen". Zwischen den, einem Anlagenbereich L zugeordneten Programmseiten P erfolgt eine einfache Führung, bevorzugt über Navigationstasten 7. Bevorzugt ist demnach vorgesehen, dass die ablaufrelevanten Programmseiten P eines gewählten Anlagenbereichs L oder eines gewählten Aufgabenbereichs F nur in einer bestimmten Reihenfolge nacheinander anzeigbar sind, wobei besonders bevorzugt in der Unterebene U Navigationstasten 7 anzeigbar sind, wobei durch Betätigen der Navigationstasten 7 die Programmseiten P gemäß der bestimmten Reihenfolge nacheinander oder in umgekehrter Reihenfolge anzeigbar sind. Ein Wechsel zwischen den Programmseiten P eines ausgewählten Anlagenbereichs L kann auch über Gesten (z.B. durch "Wischen" über den berührungsempfindlichen Bildschirm 3) erfolgen. Es kann somit innerhalb eines Anlagenbereichs L einfach von einer Programmseite P in die nächste und wieder zurück gewechselt werden. Der Bediener sieht, auf welcher Programmseite P er sich aktuell befindet und welche Programmseite P davor und danach geöffnet wird. Die einzelnen Pogrammseiten P sind in Fig. 2 über die strichliert dargestellten und hintereinander liegenden Schichten ersichtlich (siehe z.B. Unterebene U1).

Prinzipiell sollte auf jeder Programmseite P zumindest ein Parameter R oder ein Auslösesymbol A angezeigt werden. Bevorzugt ist demnach vorgesehen, dass auf jeder ablaufrelevanten Programmseite P zumindest ein Auslösesymbol A anzeigbar ist, wobei durch Betätigung einer dem Auslösesymbol A zugeordneten Bedientaste 6 eine entsprechende Aktion eines Spritzgießmaschinenelements 5 auslösbar ist. Zusätzlich oder alternativ kann vorgesehen sein, dass auf den ablaufrelevanten Programmseiten P maschinenspezifische Parameter R anzeigbar sind.

Gemäß einem weiteren bevorzugten Ausführungsbeispiel kann vorgesehen sein, dass die hierarchische Systemarchitektur eine Metaebene Z aufweist, die unabhängig von der angezeigten Ebene H, M oder U auswählbar ist. Somit können allgemeine Funktionen wie Drucken, Onlinehiife, Rezepturdatenverwaltung, usw. zentral zur Verfügung gestellt werden, wodurch sie immer zugänglich sind und unabhängig von der aktiven Programmseite P vom Bediener ausgewählt werden können.

Wenn gemäß Fig. 2 nicht das anlagenspezifische Menü N1, sondern das aufgabenspezifische Menü N2 ausgewählt wird, so stehen einem Bediener (z. B. Wartungspersonal) strukturierte und übersichtliche Aufgabenbereiche F1 bis F5 zur Verfügung. Eine solche Aufgabe F könnte beispielsweise die Wartung der Maschine oder eines Roboters sein, wobei jeweils nur wenige Programmseiten P bereits in der richtigen Reihenfolge gespeichert und schnell auswählbar sind. Im Gegensatz zur neuen Erfindung war es aufgrund der unzähligen Steuerungsgenerationen und der verschiedensten Maschinenhersteller bisher nicht einfach, die notwendigen Programmseiten P und Parameter R zu finden. Im neuen Navigationskonzept wählt der Bediener jene Aufgabe F1 bis F5 (in diesem Fall Wartung) aus, die er zu erledigen hat. Es werden dem Bediener in der Unterebene U (z.B. U4) nur mehr jene Programmseiten P angeboten, welche für seinen gewählten Aufgabenbereich F relevant sind. Innerhalb des Aufgabenbereichs F erfolgt eine einfache Führung durch die dem Aufgabenbereich F zugeordneten Programmseiten P. Der Wechsel von einer Programmseite P zur nächsten bzw. vorherigen erfolgt durch die Anwahl von Buttons (Navigationstasten 7) oder durch einfache Gesten oder ähnlichem. Die Anordnung der Programmseiten P erfolgt entsprechend dem logischen Arbeitsablauf. Des Weiteren hat der Bediener die Möglichkeit weitere Programmseiten P einer Aufgabe bzw. einem Aufgabenbereich F zuzuordnen und die Anordnung der Programmseiten P an seine Arbeitsabläufe anzupassen.

Für das Einstellen des Navigierens ist es zusätzlich von Vorteil wenn zumindest in den Ebenen M und U Hierarchietasten 8 anzeigbar sind, wobei durch Betätigen der Hierarchietaste 8 eine höhere Ebene H oder M anzeigbar ist.

In Fig. 3 ist eine mögliche Startseite des Bedienprogramms B dargestellt, wie sie auf einem Bildschirm 3 zu Beginn einem Bediener präsentiert wird. Gemäß dieser Variante ist automatisch die obere, anlagenspezifische Ebene M1 vorselektioniert und sämtliche Anlagenbereiche L werden in einer Art Karussell angezeigt. Durch "Wischen" über das am Bildschirm 3 dargestellte Karussell wird dieses gedreht, wobei für den am größten bzw. für den vorne in der Mitte dargestellten Anlagenbereich L die dazupassenden Untermenüs U als Icons im darunterliegenden Bildschirmbereich dargestellt werden. Wenn keine Arbeit an einem bestimmten Anlagenbereich L durchgeführt werden soll, kann auch durch Betätigen des Buttons für das aufgabenspezifische Menü N2 in die obere, aufgabenspezifische Ebene M2 gewechselt werden.

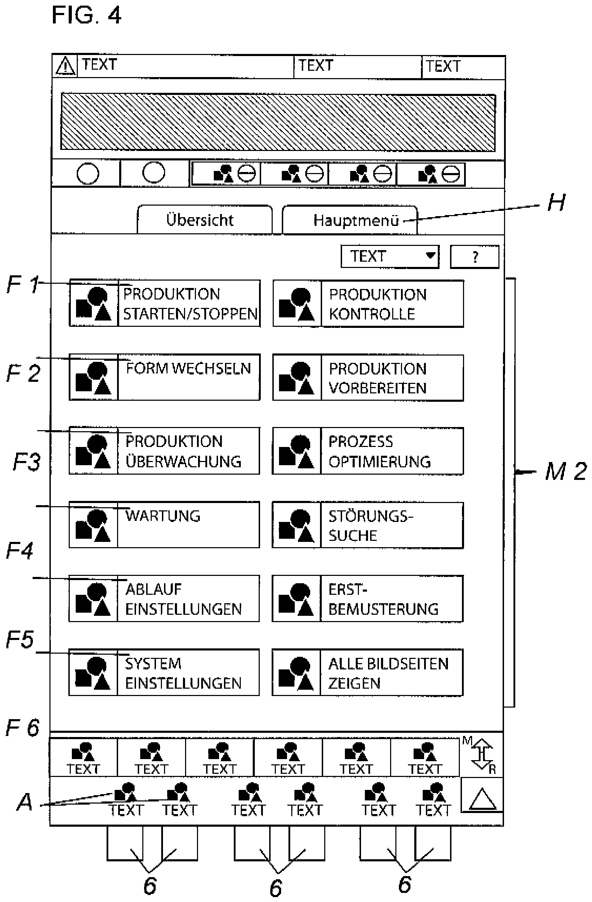

Ein Beispiel für eine mögliche Darstellung der oberen, aufgabenspezifischen Ebene M2 ist in Fig. 4 gezeigt. In dieser Ebene M2 kann ein Bediener zwischen den verschiedenen Aufgabenbereichen F auswählen, die in diesem Fall tabellarisch angeordnet sind Natürlich können auch diese Aufgabenbereiche F karussellartig angeordnet sein. Im unteren Bereich sind in Fig. 4 auch die Bedientasten 6 ersichtlich, die am Bildschirm 3 angeordnet sind.

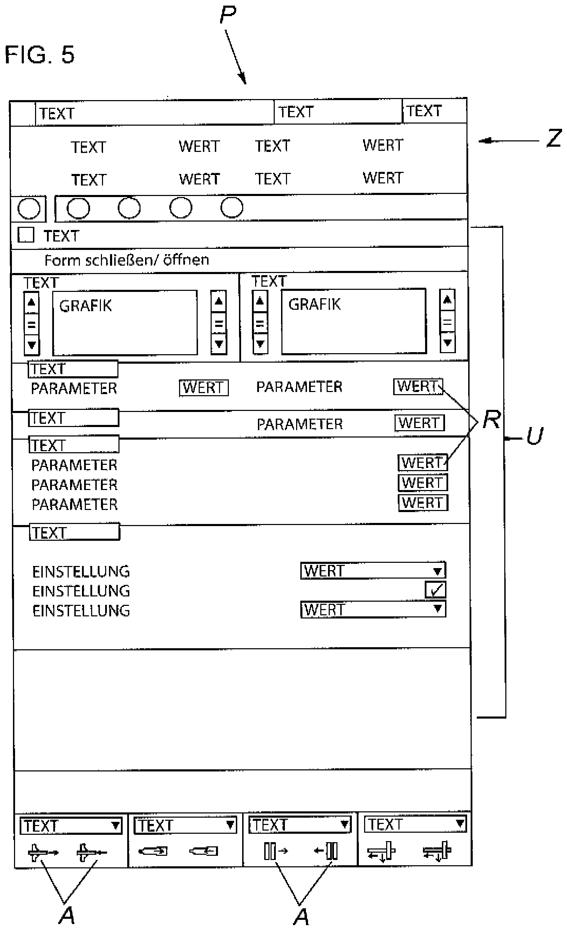

In Fig. 5 ist beispielhaft eine Programmseite P (Form schließen/öffnen) dargestellt, wie sie in der Unterebene U der hierarchischen Systemarchitektur auf dem Bildschirm 3 der Bedieneinheit 1 der Spritzgießmaschine 2 angezeigt wird. Auf dieser Programmseite P können diverse Parameter R geändert werden. Am wichtigsten aber ist, dass durch Betätigen der nicht dargestellten Bedientasten 6 entsprechend der darüber angezeigten Auslösesymbole A eine Aktion eines Spritzgießelementes 5 ausgelöst wird. Im oberen Bereich ist auch die Metaebene Z ersichtlich.

Durch die vorliegende Erfindung ist somit eine gegenüber dem Stand der Technik wesentlich verbesserte Bedieneinheit 1 einer Spritzgießmaschine 2 gezeigt, wobei durch die einfache Gestaltung der Ebenen (gegebenenfalls Hauptebene H, obere Ebene M und Unterebene U) und der logischen Zuordnung der einzelnen Programmseiten P zu den einzelnen Aufgabenbereichen F bzw. Anlagenbereichen L eine für den Bediener sofort verständliche und einfach zu bedienende Bedienoberfläche geschaffen ist.

## Patentansprüche

1. Bedieneinheit (1) für eine Spritzgießmaschine (2), mit
- einem berührungsempfindlichen Bildschirm (3) zur Anzeige eines Bedienprogramms (B),
- einer Steuer- oder Regeleinheit (4) zum Übermitteln von Bediensignalen (S) an Spritzgießmaschinenelemente (5), wobei in der Steuer- oder Regeleinheit (4) das Bedienprogramm (B) gespeichert ist, und
- zumindest einer Bedientaste (6), bei deren Betätigung die Steuer- oder Regeleinheit (4) eine Aktion eines Spritzgießmaschinenelementes(5) auslöst,
wobei das Bedienprogramm (B) eine hierarchische Systemarchitektur aufweist, mit
- zumindest einer oberen, anlagenspezifischen Ebene (M1), wobei in der anlagenspezifischen Ebene (M1) zwischen verschiedenen Anlagenbereichen (L1-L5) auswählbar ist, und
- einer oberen, aufgabenspezifischen Ebene (M2), wobei in der aufgabenspezifischen Ebene (M2) zwischen verschiedenen Aufgabenbereichen (F1-F5) auswählbar ist, und
- einer Vielzahl von Unterebenen (U1-U6), wobei in jeder gewählten Unterebene (U1-U6) nur dem gewählten Anlagenbereich (L1-L5) oder nur dem gewählten Aufgabenbereich (F1-F5) zugeordnete ablaufrelevante Programmseiten (P) anzeigbar sind,
wobei
- entweder beim Einstieg in das Bedienprogramm (B) automatisch eine der beiden oberen Ebenen (M1, M2) vorselektioniert ist, wobei ein Button für die jeweils nicht ausgewählte, obere Ebene (M1, M2) angezeigt wird und durch Betätigen dieses Buttons entsprechend die verschiedenen Anlagenbereiche (L1-L5) beziehungsweise die verschiedenen Aufgabenbereiche (F1-F5) angezeigt werden, oder wobei
- die hierarchische Systemarchitektur eine Hauptebene (H1) aufweist, in der zwischen einem anlagenspezifischen Menü (N1) und einem aufgabenspezifischen Menü (N2) auswählbar ist, wobei in der Hauptebene (H1) zwei Startpunkte angezeigt werden, welche das anlagenspezifische Menü (N1) und das aufgabenspezifische Menü (N2) repräsentieren, wobei das Bedienprogramm (B) und entsprechend die Anzeige auf dem Bildschirm (3) in die obere, anlagenspezifische Ebene (M1) oder in die obere, aufgabenspezifische Ebene (M2) wechselt, wenn das anlagenspezifische Menü (N1) beziehungsweise das aufgabenspezifische Menü (N2) ausgewählt wird.

2. Bedieneinheit nach Anspruch 1, **dadurch gekennzeichnet, dass** die obere, anlagenspezifische Ebene (M1) und die obere, aufgabenspezifische Ebene (M2) in der hierarchischen Systemarchitektur gleichrangig sind.

3. Bedieneinheit nach Anspruch 1 oder 2, **dadurch gekennzeichnet, dass** auf jeder ablaufrelevanten Programmseite (P) zumindest ein Auslösesymbol (A) anzeigbar ist, wobei durch Betätigung einer dem Auslösesymbol (A) zugeordneten Bedientaste (6) eine entsprechende Aktion eines Spritzgießmaschinenelements (5) auslösbar ist.

4. Bedieneinheit nach einem der Ansprüche 1 bis 3, **dadurch gekennzeichnet, dass** auf den ablaufrelevanten Programmseiten (P) maschinenspezifische Parameter (R) anzeigbar sind.

5. Bedieneinheit nach einem der Ansprüche 1 bis 4, **dadurch gekennzeichnet, dass** die ablaufrelevanten Programmseiten (P) eines gewählten Anlagenbereichs (L) oder eines gewählten Aufgabenbereichs (F) nur in einer bestimmten Reihenfolge nacheinander anzeigbar sind.

6. Bedieneinheit nach Anspruch 5, **dadurch gekennzeichnet, dass** in der Unterebene (U) Navigationstasten (7) anzeigbar sind, wobei durch Betätigen der Navigationstasten (7) die Programmseiten (P) gemäß der bestimmten Reihenfolge nacheinander oder in umgekehrter Reihenfolge anzeigbar sind.

7. Bedieneinheit nach einem der Ansprüche 1 bis 6, **dadurch gekennzeichnet, dass** zumindest in der oberen Ebene (M) und der Unterebene (U) Hierarchietasten (8) anzeigbar sind, wobei durch Betätigen der Hierarchietaste (8) eine höhere Ebene (H, M) anzeigbar ist.

8. Bedieneinheit nach einem der Ansprüche 1 bis 7, **dadurch gekennzeichnet, dass** einem Anlagenbereich (L1-L5) oder einem Aufgabenbereich (F1-F5) neue Programmseiten (P) oder Programmseiten (P) anderer Anlagenbereiche (L1-L5) oder anderer Aufgabenbereiche (F1-F5) zuweisbar sind.

9. Bedieneinheit nach einem der Ansprüche 1 bis 8, **dadurch gekennzeichnet, dass** die hierarchische Systemarchitektur eine Metaebene (Z) aufweist, die unabhängig von der angezeigten Ebene (H, M, U) auswählbar ist.

10. Spritzgießmaschine (2) mit mehreren aktivierbaren Spritzgießmaschinenelementen (5) und einer Bedieneinheit (1) nach einem der Ansprüche 1 bis 9.

11. Verfahren zum Bedienen einer Bedieneinheit (1) einer Spritzgießmaschine (2), insbesondere nach Anspruch 10, mit
- einem berührungsempfindlichen Bildschirm (3), auf dem ein Bedienprogramm (B) mit hierarchischer Systemarchitektur angezeigt wird,
- einer Steuer- oder Regeleinheit (4), von der Bediensignale (S) an Spritzgießmaschinenelemente (5) übermittelt werden, wobei in der Steuer- oder Regeleinheit (4) das Bedienprogramm (B) gespeichert ist, und
- zumindest einer Bedientaste (6), bei deren Betätigung von der Steuer- oder Regeleinheit (4) eine Aktion eines Spritzgießmaschinenelementes (5) ausgelöst wird,
wobei das Verfahren folgende Schritte aufweist:
- Einsteigen in das Bedienprogramm (B), wobei
• entweder automatisch eine obere, anlagenspezifische Ebene (M1) oder eine obere, aufgabenspezifische Ebene (M2) der hierarchischen Systemarchitektur vorselektioniert ist, wobei ein Button für die jeweils nicht ausgewählte, obere Ebene (M1, M2) angezeigt wird und durch Betätigen dieses Buttons entsprechend verschiedene Anlagenbereiche (L1-L5) beziehungsweise verschiedene Aufgabenbereiche (F1-F5) angezeigt werden,
• oder in einer Hauptebene (H1) der hierarchischen Systemarchitektur, in der zwischen einem anlagenspezifischen Menü (N1) und einem aufgabenspezifischen Menü (N2) auswählbar ist, zwei Startpunkte angezeigt werden, welche das anlagenspezifische Menü (N1) und das aufgabenspezifische Menü (N2) repräsentieren, wobei das Bedienprogramm (B) und entsprechend die Anzeige auf dem Bildschirm (3) in die obere, anlagenspezifische Ebene (M1) oder in die obere, aufgabenspezifische Ebene (M2) wechselt, wenn das anlagenspezifische Menü (N1) beziehungsweise das aufgabenspezifische Menü (N2) ausgewählt wird,
- Anzeigen der oberen, anlagenspezifischen Ebene (M1) oder der oberen, aufgabenspezifischen Ebene (M2) in Abhängigkeit des vorher gewählten Menüs (N1, N2) beziehungsweise der vorselektionierten Auswahl,
- Auswählen eines Anlagenbereichs (L) aus den verschiedenen angezeigten Anlagenbereichen (L1-L5) beziehungsweise eines Aufgabenbereichens (F) aus den verschiedenen angezeigten Aufgabenbereichen (F1-F5),
- Anzeigen einer Unterebene (U1-U6) in Abhängigkeit des ausgewählten Anlagebereichs (L1-L5) beziehungsweise des ausgewählten Aufgabenbereichs (F1-F5),
wobei in jeder gewählten Unterebene (U1-U6) nur dem gewählten Anlagenbereich (L1-L5) beziehungsweise nur dem gewählten Aufgabenbereich (F1-F5) zugeordnete ablaufrelevante Programmseiten (P) angezeigt werden.

12. Verfahren nach Anspruch 11, **gekennzeichnet durch** zumindest einen der weiteren Schritte:
- Auswählen eines auf der Programmseite (P) angezeigten Auslösesymbols (A), wodurch eine entsprechende Aktion eines Spritzgießmaschinenelements (5) ausgelöst wird, oder
- Auswählen bzw. Ändern eines auf der Programmseite (P) angezeigten maschinenspezifischen Parameters (R) oder
- Navigieren über Navigationstasten (7) zu einer nächsten oder einer vorhergehenden Programmseite (P) des ausgewählten Anlagenbereichs (L1-L5) oder des ausgewählten Aufgabenbereichs (F1-F5) oder
- Navigieren über Hierarchietasten (8) zu einer anderen Ebene (H, M, U) des Bedienprogramms (B) oder
- Auswählen einer Metaebene (Z) des Bedienprogramms (B).

## Claims

1. An operating unit (1) for an injection molding machine (2), comprising
- a touch-sensitive display screen (3) for displaying an operating program (B),
- a control or regulating unit (4) for communicating operating signals (S) to injection molding machine elements (5), wherein the operating program (B) is stored in the control or regulating unit (4), and
- at least one operating button (6), upon the actuation of which the control or regulating unit (4) triggers an action of an injection molding machine element (5),
wherein the operating program (B) has a hierarchical system architecture with
- at least one upper installation-specific level (M1), wherein a selection can be made between different installation regions (L1-L5) in the installation-specific central level (M1), and
- an upper task-specific level (M2), wherein a selection can be made between different task regions (F1-F5) in the task-specific central level (N2), and
- a plurality of sublevels (U1-U6), wherein process-relevant program pages (P) associated only with the selected installation region (L1-L5) or only with the selected task region (F1-F5) can be displayed in each selected sublevel (U1-U6),
wherein
- either when starting the operating program (B) one of the two upper levels (M1, M2) is automatically pre-selected, wherein a button for the respective non-selected upper level (M1, M2) is displayed and wherein the different installation regions (L1-L5) or the different task regions (F1-F5) respectively are suitably displayed by actuation of that button,
or wherein
- the hierarchical system architecture comprises a main level (H1) in which a selection can be made between an installation-specific menu (N1) and a task-specific menu (N2), wherein two start points are displayed in the main level (H1), those start points representing the installation-specific menu (N1) and the task-specific menu (N2), wherein - if the installation-specific menu (N1) or the task-specific menu (N2) is selected - then the operating program (B) changes and the display on the display screen (3) correspondingly changes into the upper installation-specific level (M1) or into the upper task-specific level (M2) respectively.

2. An operating unit as set forth in claim 1 **characterised in that** the upper installation-specific level (M1) and the upper task-specific level (M2) are of equal rank in the hierarchical system architecture.

3. An operating unit as set forth in claim 1 **characterised in that** at least one trigger symbol (A) can be displayed on each process-relevant program page (P), wherein a corresponding action of an injection molding machine element (5) can be triggered by actuation of an operating button (6) associated with the trigger symbol (A).

4. An operating unit as set forth in one of claims 1 through 3 **characterised in that** machine-specific parameters (R) can be displayed on the process-relevant program pages (P).

5. An operating unit as set forth in one of claims 1 through 4 **characterised in that** the process-relevant program pages (P) of a selected installation region (L) or of a selected task region (F) can be displayed in succession only in a given sequence.

6. An operating unit as set forth in claim 5 **characterised in that** navigation buttons (7) can be displayed in the sublevel (U), wherein by actuation of the navigation buttons (7) the program pages (P) can be displayed in accordance with the given sequence in succession or in the reversed sequence.

7. An operating unit as set forth in one of claims 1 through 6 **characterised in that** hierarchy buttons (8) can be displayed at least in the upper level (N) and the sublevel (U), wherein a higher level (H, M) can be displayed by actuation of the hierarchy button (8).

8. An operating unit as set forth in one of claims 1 through 7 **characterised in that** new program pages (P) or program pages (P) of other installation regions (L1-L5) or other task regions (F1-F5) can be allocated to an installation region (L1-L5) or a task region (F1-F5).

9. An operating unit as set forth in one of claims 1 through 8 **characterised in that** the hierarchical system architecture has a metalevel (Z) which can be selected independently of the displayed level (H, M, U).

10. An injection molding machine (2) having a plurality of activatable injection molding machine elements (5) and an operating unit (1) as set forth in one of claims 1 through 9.

11. A method of operating an operating unit (1) of an injection molding machine (2), in particular as set forth in claim 10, comprising
- a touch-sensitive display screen (3) on which an operating program (B) with a hierarchical system architecture is displayed,
- a control or regulating unit (4) by which operating signals (S) are communicated to injection molding machine elements (5), wherein the operating program (B) is stored in the control or regulating unit (4), and
- at least one operating button (6), upon the actuation of which an action of an injection molding machine element (5) is triggered by the control or regulating unit (4),
wherein the method comprises the following steps:
- accessing into the operating program (B), wherein
• either an upper installations-specific level (M1) or an upper task-specific level (M2) is automatically pre-selected, wherein a button for the respective non-selected upper level (M1, M2) is displayed and wherein different installation regions (L1-L5) or different task regions (F1-F5) respectively are suitably displayed by actuation of that button,
• or in a main level (H1) of the hierarchical system architecture in which a selection can be made between an installation-specific menu (N1) and a task-specific menu (N2), two start points are displayed, those start points representing the installation-specific menu (N1) and the task-specific menu (N2), wherein - if the installation-specific menu (N1) or the task-specific menu (N2) respectively is selected - then the operating program (B) changes and the display on the display screen (3) correspondingly changes into the upper installation-specific level (M1) or into the upper task-specific level (M2),
- displaying the upper installation-specific level (M1) or the upper task-specific level (M2) in dependence on the previously selected menu (N1, N2) or the pre-selected selection respectively,
- selecting an installation region (L) from the various displayed installation regions (L1-L5) or a task region (F) from the different displayed task regions (F1-F5) respectively,
- displaying a sublevel (U1-U6) in dependence on the selected installation region (L1-L5) or the selected task region (F1-F5) respectively, wherein process-relevant program pages (P) associated only with the selected installation region (L1-L5) or only with the selected task region (F1-F5) respectively are displayed in each selected sublevel (U1-U6).

12. A method as set forth in claim 11 **characterised by** at least one of the further steps:
- selecting a trigger symbol (A) displayed on the program page (P), whereby a corresponding action of an injection molding machine element (5) is triggered, or
- selecting or altering a machine-specific parameter (R) displayed on the program page (P), or
- navigating by way of navigation buttons (7) to a next or a preceding program page (P) of the selected installation region (L1-L5) or the selected task region (F1-F5), or
- navigating by way of hierarchy buttons (8) to another level (H, M, U) of the operating program (B), or
- selecting a metalevel (Z) of the operating program (B).

## Revendications

1. Unité de commande (1) pour une machine de moulage par injection (2), avec
- un écran tactile (3) pour l'affichage d'un programme de commande (B),
- une unité de contrôle ou de régulation (4) pour la transmission de signaux de commande (S) à des éléments de la machine de moulage par injection (5), le programme de commande (B) étant enregistré dans l'unité de contrôle ou de régulation (4) et
- au moins une touche de commande (6) lors de l'actionnement de laquelle l'unité de contrôle ou de régulation (4) déclenche une action d'un élément de la machine de moulage par injection (5),
le programme de commande (B) présentant une architecture de système hiérarchique, avec
- au moins un niveau supérieur spécifique à l'installation (M1), moyennant quoi il est possible de choisir entre différentes zones de l'installation (L1-L5) dans le niveau spécifique à l'installation (M1) et
- un niveau supérieur spécifique à la tâche (M2), moyennant quoi il est possible de choisir entre différentes zones de tâches (F1-F5) dans le niveau spécifique à la tâche (M2) et
- une pluralité de sous-niveaux (U1-U6), moyennant quoi, dans chaque sous-niveau (U1-U6) choisi, seules les pages du programme (P) importantes pour le déroulement et correspondant à la zone de l'installation (L1-L5) choisie ou à la zone de tâche (F1-F5) choisie peuvent être affichées,
moyennant quoi
- soit un des deux niveaux supérieurs (M1, M2) est présélectionné automatiquement lors de l'entrée dans le programme de commande (B), un bouton étant affiché pour le niveau supérieur (M1, M2) non sélectionné et l'actionnement de ce bouton permet d'afficher, de manière appropriée, les différentes zones de l'installation (L1-L5) ou les différentes zones de tâches (F1-F5),
ou moyennant quoi
- l'architecture de système hiérarchique comprend un niveau principal (H1) dans lequel il est possible de choisir entre un menu spécifique à l'installation (N1) et un menu spécifique à une tâche (N2), moyennant quoi, dans le niveau principal (H1), sont affichés deux points de départ qui représentent le menu spécifique à l'installation (N1) et le menu spécifique à une tâche (N2), le programme de commande (B) et, de manière correspondante, l'affichage sur l'écran (3), changeant pour le niveau supérieur spécifique à l'installation (M1) ou le niveau supérieur spécifique à la tâche (M2) lorsque le menu spécifique à l'installation (N1) ou le menu spécifique à la tâche (N2) est sélectionné.

2. Unité de commande selon la revendication 1, **caractérisée en ce que** le niveau supérieur spécifique à l'installation (M1) et le niveau supérieur spécifique à la tâche (M2) sont de même rang dans l'architecture de système hiérarchique.

3. Unité de commande selon la revendication 1 ou 2, **caractérisée en ce que**, sur chaque page du programme (P) correspondante, au moins un symbole de déclenchement (A) peut être affiché, l'actionnement d'une touche de commande (6) correspondant au symbole de déclenchement (A) permettant de déclencher une action correspondante d'un élément de la machine de moulage par injection (5).

4. Unité de commande selon l'une des revendications 1 à 3, **caractérisée en ce que**, sur les pages du programme (P) concernant le déroulement, peuvent être affichés des paramètres spécifiques à la machine (R).

5. Unité de commande selon l'une des revendications 1 à 4, **caractérisée en ce que** les pages du programme (P), concernant le déroulement, d'une zone de l'installation (L) choisie ou d'une zone de tâche (F) choisie, peuvent être affichées successivement uniquement dans un ordre déterminé.

6. Unité de commande selon la revendication 5, **caractérisée en ce que**, dans le sous-niveau (U), peuvent être affichées des touches de navigation (7), l'actionnement des touches de navigation (7) permettant d'afficher les pages de programme (P) les unes après les autres dans l'ordre déterminé ou dans l'ordre inverse.

7. Unité de commande selon l'une des revendications 1 à 6, **caractérisée en ce que**, au moins dans le niveau supérieur (M) et dans le sous-niveau (U), peuvent être affichées des touches hiérarchiques (8), l'actionnement de la touche hiérarchique (8) permettant d'afficher un niveau plus élevé (H, M).

8. Unité de commande selon l'une des revendications 1 à 7, **caractérisée en ce que**, à une zone d'installation (L1-L5) ou à une zone de tâche (F1-F5), peuvent être attribuées de nouvelles pages de programme (P) ou des pages de programmes (P) d'autres zones d'installation (L1-L5) ou d'autres zones de tâches (F1-F5).

9. Unité de commande selon l'une des revendications 1 à 8, **caractérisée en ce que** l'architecture de système hiérarchique comprend un méta-niveau (Z) qui peut être sélectionné indépendamment du niveau affiché (H, M, U).

10. Machine de moulage par injection (2) avec plusieurs éléments de machine de moulage par injection (5) activables et une unité de commande (1) selon l'une des revendications 1 à 9.

11. Procédé d'exploitation d'une unité de commande (1) d'une machine de moulage par injection (2), plus particulièrement selon la revendication 10, avec
- un écran tactile (3) pour l'affichage d'un programme de commande (B),
- une unité de contrôle ou de régulation (4) pour la transmission de signaux de commande (S) à des éléments de la machine de moulage par injection (5), le programme de commande (B) étant enregistré dans l'unité de contrôle ou de régulation (4) et
- au moins une touche de commande (6) lors de l'actionnement de laquelle l'unité de contrôle ou de régulation (4) déclenche une action d'un élément de la machine de moulage par injection (5),
le procédé comprenant les étapes suivantes :
- entrée dans le programme de commande (B), moyennant quoi
• soit un niveau supérieur spécifique à l'installation (M1) soit un niveau supérieur spécifique à une tâche (M2) de l'architecture de système hiérarchique est présélectionné automatiquement, un bouton étant affiché pour le niveau supérieur (M1, M2) non sélectionné et l'actionnement de ce bouton permettant d'afficher, de manière appropriée, les différentes zones de l'installation (L1-L5) ou les différentes zones de tâches (F1-F5),
• ou, dans un niveau principal (H1) de l'architecture de système hiérarchique, dans lequel il est possible de choisir entre un menu spécifique à l'installation (N1) et un menu spécifique à une tâche (N2), sont affichés deux points de départ qui représentent le menu spécifique à l'installation (N1) et le menu spécifique à une tâche (N2), le programme de commande (B) et, de manière correspondante, l'affichage sur l'écran (3), changeant pour le niveau supérieur spécifique à l'installation (M1) ou le niveau supérieur spécifique à la tâche (M2) lorsque le menu spécifique à l'installation (N1) ou le menu spécifique à la tâche (N2) est sélectionné.
- affichage du niveau supérieur spécifique à l'installation (M1) ou du niveau supérieur spécifique à une tâche (M2) en fonction du menu (N1, N2) sélectionné précédemment ou de la sélection présélectionnée,
- sélection d'une zone d'installation (L) parmi les différentes zones d'installation (L-L5) ou d'une zone de tâche (F) parmi les différentes zones de tâches (F1-F5),
- affichage d'un sous-niveau (U1-U6) en fonction de la zone d'installation (L1-L5) sélectionnée ou de la zone de tâche (F1-F5) sélectionnée,
moyennant quoi, dans chaque sous-niveau (U1-U6) sélectionné, seules sont affichées les pages de programme (P) concernant le déroulement, correspondant à la zone d'installation (L1-L5) sélectionnée ou à la zone de tâche (F1-F5) sélectionnée.

12. Procédé selon la revendication 11, **caractérisée par** au moins une des étapes supplémentaires suivantes :
- sélection d'un symbole de déclenchement (A) affiché sur la page de programme (P), ce qui permet de déclencher une action correspondante d'un élément de machine de moulage par injection (5) ou
- sélection ou modification d'un paramètre spécifique à la machine (R) affiché sur la page de programme (P) ou
- navigation par des touches de navigation (7) vers une page de programme (P) suivante ou précédente de la zone d'installation (L1-L5) sélectionnée ou de la zone de tâche (F1-F5) sélectionnée ou
- navigation par des touches hiérarchiques (8) vers un autre niveau (H, M, U) du programme de commande (B) ou
- sélection d'un méta-niveau (Z) du programme de commande (B).
